# EUROPEAN PATENT SPECIFICATION

(11) **EP 3 760 917 B1**
(45) Date of publication and mention of the grant of the patent: **09.04.2025**
(21) Application number: 20183526.1
(22) Date of filing: 01.07.2020
(51) Int. Cl.: F21V 5/04

(54) **EXTRUDED LENS FOR DISTRIBUTING LIGHT RADIATION, LAMP, LAMP HOLDER ASSEMBLY AND MERCHANDISE DISPLAY**
EXTRUDIERTE LINSE ZUR VERTEILUNG VON LICHTSTRAHLUNG; LAMPE, LAMPENHALTER-MONTAGE UND WARENANZEIGE
LENTILLE EXTRUDÉE POUR DISTRIBUER LES RAYONNEMENT LUMINEUX, LAMPE, SUPPORT DE LAMPE ET AFFICHAGE DE MARCHANDISE

(30) Priority: 02.07.2019 IT 201900010713
(43) Date of publication of application: 06.01.2021
(73) Proprietor: ITL S.R.L., 20123 Milano (IT)
(72) Inventor: CERVINO, Michele, I-20090 Assago (MI) (IT)
(74) Representative: Crippa, Paolo Ernesto

(56) References cited:
- WO-A1-2011/010790
- WO-A1-2013/060527
- US-A1- 2011 141 734
- US-A1- 2015 145 406
- US-A1- 2016 348 855

## Description

### . Field of the invention

**.** The present invention relates to a lens for distributing light radiation, to a lamp, to a lamp holder assembly and to a merchandise display, particularly, but not exclusively, for applications in the retail sector.

### . Background art

**.** When lighting merchandise on display, for example, in a store, the need is particularly felt to direct the light radiation so that no light beams are present in the direction of observation of an external user. Otherwise, the light beams may dazzle the external user and make the viewing of the merchandise on display difficult, with a consequent impact on sales.

**.** Furthermore, in the context of the lighting of merchandise displayed in a store, a further requirement lies in the uniform lighting of the merchandise displayed at different heights, for example, on a shelf display, so that all the merchandise displayed is completely visible in an even manner, regardless of the vertical and lateral position on the front, for example of a display. In other words, the need is felt to illuminate, in a diffused, uniform and shadowless manner, vertical surfaces on which products for sale are displayed at different heights from the ground, so as to reduce, if not to eliminate, the formation of more or less illuminated areas, which would make some products stand out more than others in an undesirable manner.

**.** Document US8414141 describes a LED lamp which illuminates a service area, in the example a filling station, asymmetrically orienting the light radiation so as not to dazzle a user entering the service area. Such lamp comprises an extruded converging lens having a plane of symmetry inclined with respect to a vertical plane. Below the extruded lens a linear array of LEDs is positioned at a predefined distance from the axis of symmetry of the lens on the side of the axis of symmetry where the lens is closest to the part of the lamp from which the light radiation is emitted. Thereby the light radiation illuminates the service area with an angle of incidence in the service area inlet direction of less than 60° with respect to the vertical axis, thus allowing to reduce the dazzling of users approaching.

**.** However, in the context of the lighting of products on display, such type of lamp is not very suitable, since, although partially solving the issue of reducing the dazzling of approaching users, it emits directed light radiation having a large opening angle which may create undesired gray areas and unevenly illuminate the products on display and consequently decrease the visibility of some products compared to others in an uncontrolled manner. Other solutions are known from documents WO2011010790, US2016348855 and D3.

**.** Therefore, the need remains strongly felt to have a light beam which may be oriented so as to reduce dazzling and, at the same time, which allows to obtain an even illumination of objects displayed at different heights on a vertical surface with an illumination as uniform as possible, minimizing the formation of areas in shade and areas more illuminated with respect to others. In other words, the need remains felt to reach two contrasting effects, namely the concentration of the light beam, so as to illuminate the products on display, avoiding to annoy the sight of those approaching such objects, and at the same time the uniform diffusion of the light beams, so as to make each object displayed stand out evenly and limit the formation of areas in shade, which would reduce the three-dimensional perception of the object and of the features thereof.

**.** The issue underlying the present invention is therefore that of designing a device for distributing light which has structural and functional features such as to satisfy the aforementioned requirements and, at the same time, to overcome the drawbacks mentioned with reference to the background art.

### . Solution

**.** The present invention aims to provide a device for distributing light capable of reducing the occurrence of areas of greater and lesser illumination on products on display, while at the same time avoiding dazzling users approaching the products to be purchased.

**.** This and other objects and advantages are achieved by a lens for distributing light radiation according to claim 1, as well as a lamp according to claim 7, as well as a lamp holder assembly according to claim 9, as well as a merchandise display according to claim 11.

**.** Some advantageous embodiments are the subject of the dependent claims.

**.** The analysis of this solution has shown how the proposed solution allows to obtain a uniform distribution of the light radiation in a better manner with respect to the solutions of the background art, therefore a reduction of under-illuminated areas which overshadow some products with respect to others.

**.** Furthermore, the proposed solution maintains an orientation of the light radiation which does not disturb the sight of users approaching the products on display both frontally and laterally.

### . Figures

**.** Further features and advantages of the lens, the lamp, the lamp holder assembly and the merchandise display will become apparent from the following description of the preferred embodiments thereof, given by way of non-limiting example, with reference to the accompanying Figures in which:

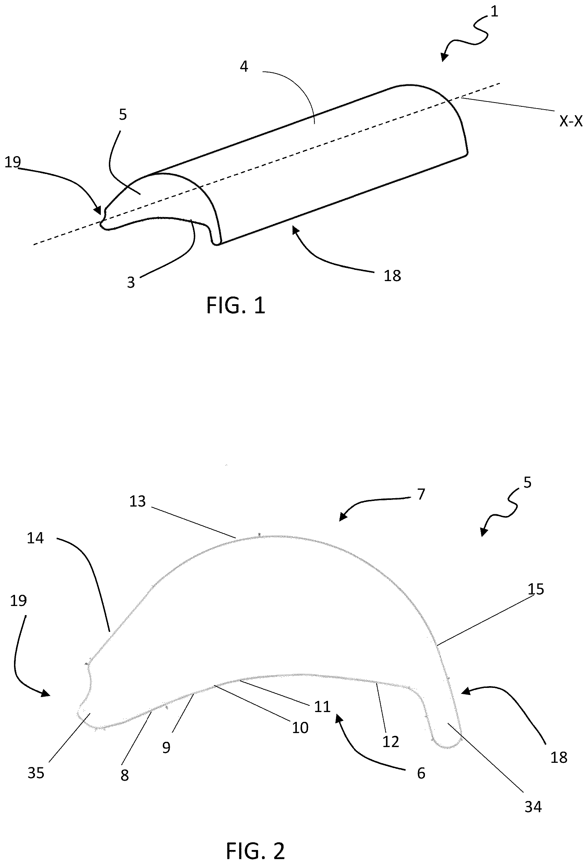

- Figure 1 shows a perspective view of a lens for distributing light radiation according to the present invention;
- Figure 2 shows a side view of a section orthogonal to the line X-X of Figure 1;

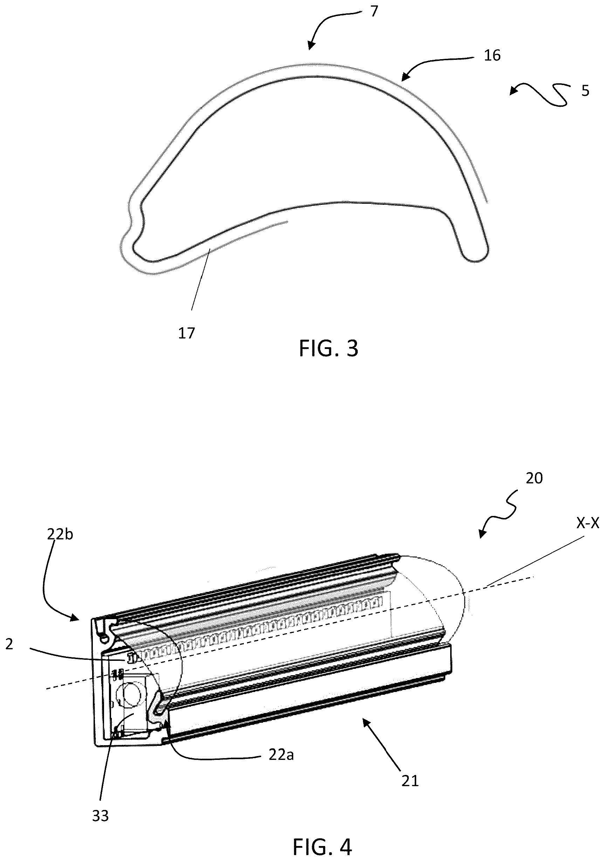

- Figure 3 shows a side view of a section orthogonal to the line X-X of Figure 1, in which an external surface layer is shown according to a further embodiment of the lens of Figure 1;
- Figure 4 shows a perspective view of a lamp according to the present invention which comprises the lens of Figure 1;

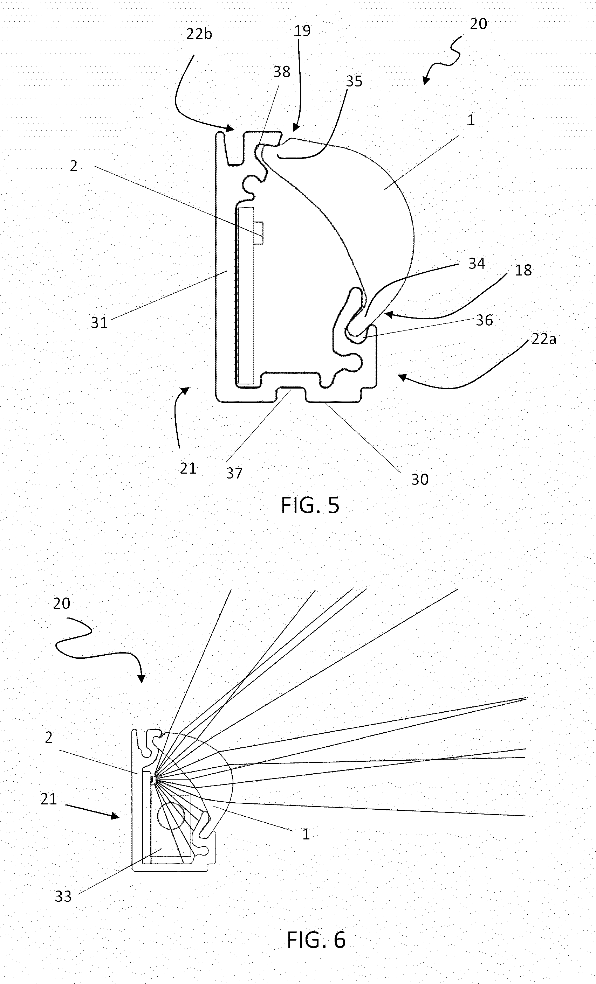

- Figure 5 shows a side view of a section orthogonal to the line X-X of Figure 4;
- Figure 6 shows a side view of a further section orthogonal to the line X-X of Figure 4, in which a diagram is shown of the light radiation refraction directions of the lamp of Figure 4;

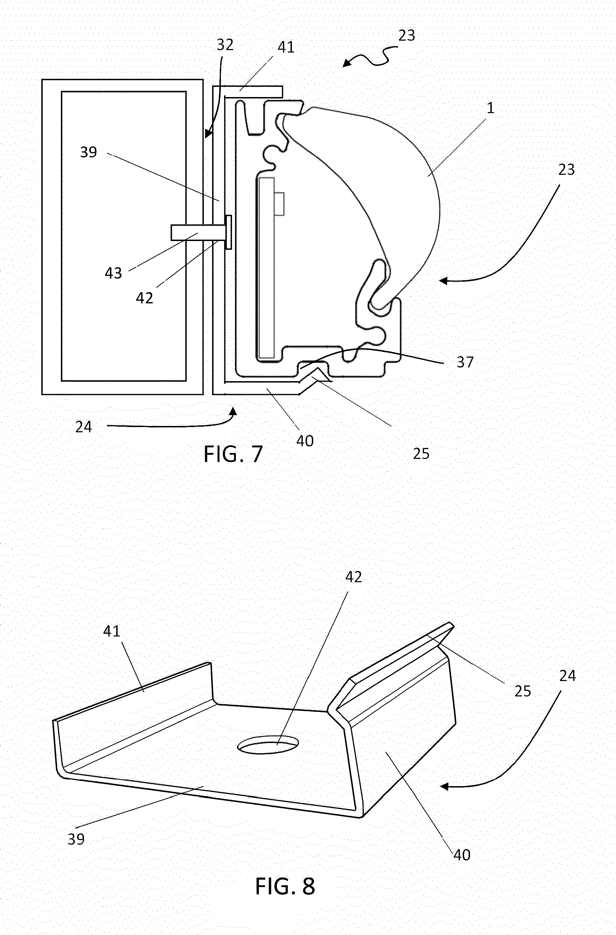

- Figure 7 shows a side view of a section orthogonal to the line X-X of Figure 4, a lamp holder assembly according to the present invention which comprises the lamp of Figure 4;
- Figure 8 shows a perspective view of a component of the lamp holder assembly of Figure 7;
- Figure 9 shows a perspective view of a merchandise display according to an embodiment comprising the lamp holder assembly of Figure 7;
- Figure 10 shows a side view of a detail sectioned perpendicular to the line X-X of Figure 9;
- Figure 11 shows a distribution curve of the light emitted by the lamp of Figure 4 shown in polar coordinates referred to a section orthogonal to the line X-X of Figure 9;
- Figure 12 shows a perspective view of a merchandise display according to a further embodiment comprising a plurality of lamp holders of Figure 7;
- Figure 13 shows a side view of a detail sectioned perpendicular to the line X-X of Figure 12;
- Figure 14 shows a distribution curve of the light emitted by the lamp of Figure 4 shown in polar coordinates referred to a section orthogonal to the line X-X of Figure 12;
- Figure 15 shows a distribution curve of the light emitted by the lamp of Figure 4 comprising the lens of Figure 2 shown in polar coordinates;
- Figure 16 shows a distribution curve, shown in polar coordinates, of the light emitted by the lamp of Figure 4 comprising the lens of Figure 3.

### . Description of some preferred embodiments

**.** As it may be seen from the Figures, in accordance with a general embodiment, an extruded lens for distributing the light radiation emitted by a plurality of LEDs 2 is identified with reference numeral 1.

**.** Said extruded lens 1 defines a longitudinal extension lens axis X-X.

**.** In accordance with an embodiment, said longitudinal extension lens axis X-X is straight.

**.** In accordance with a further embodiment, said longitudinal extension lens axis X-X coincides with the extrusion axis of the extruded lens 1.

**.** Said extruded lens 1 comprises an inlet surface 3 of the radiation which can face said plurality of LEDs 2.

**.** In particular, said inlet surface 3 of the radiation is defined by the active refraction surface through which the light radiation emitted by said plurality of LEDs 2 undergoes a first refraction.

**.** Said extruded lens 1 comprises an outlet surface 4 of the radiation from said extruded lens 1.

**.** In particular, said outlet surface 4 is defined by the active refraction surface through which the light radiation emitted by said plurality of LEDs 2 undergoes a further refraction following the first refraction of the inlet surface 3 coming out of said extruded lens 1.

**.** Said extruded lens 1 comprises a transverse lens section 5.

**.** In particular, said transverse lens section 5 is transverse to said longitudinal extension lens axis X-X.

**.** Preferably, said transverse lens section 5 is orthogonal to said axis X-X.

**.** With further detail, said transverse lens section 5 is a section with an asymmetrical shape.

**.** Said transverse lens section 5 comprises a radiation inlet edge 6.

**.** In particular, said radiation inlet edge 6 is a concave edge.

**.** Said transverse lens section 5 comprises a radiation outlet edge 7.

**.** In particular, said radiation outlet edge 7 is a convex edge.

**.** Said radiation inlet edge 6 comprises at least one plurality of first rectilinear portions, a part of which is indicated in the Figures with reference numerals 8, 9, 10, 11, 12.

**.** Said radiation outlet edge 7 comprises at least one first arc of circumference 13 and at least one second rectilinear portion 14.

**.** Said first arc of circumference 13 is adjacent to said at least one second rectilinear portion 14.

**.** It should be noted that an extrusion of said radiation inlet edge 6 and of said radiation outlet edge 7 along the length of said longitudinal extension lens axis X-X respectively defines said radiation inlet surface 3 and said radiation outlet surface 4 of said extruded lens 1.

**.** In accordance with the invention, said radiation outlet edge 7 comprises a second arc of circumference 15.

**.** Said second arc of circumference 15 is adjacent to said first arc of circumference 13.

**.** Therefore, according to this disclosure, said radiation outlet edge seamlessly comprises, in sequence, said second rectilinear portion 14, said first arc of circumference 13 and said second arc of circumference 15

. In accordance with an embodiment, said first arc of circumference 13 has an extension greater than the sum of the extension of the second rectilinear portion 14 and the extension of the second arc of circumference 15.

. In accordance with an embodiment, said second arc of circumference 15 has a construction radius between three and four times greater than the size of the construction radius of said first arc of circumference 13.

**.** In accordance with an embodiment, said radiation inlet edge 3 exclusively comprises said plurality of first rectilinear portions 8, 9, 10, 11, 12 in a predefined number.

**.** In accordance with an embodiment, two first rectilinear portions of said at least one plurality of first rectilinear portions 8, 9, 10, 11, 12 positioned adjacent to each other have extensions which are different from each other.

**.** In accordance with an embodiment, two rectilinear portions of said at least one plurality of first rectilinear portions 8, 9, 10, 11, 12 positioned adjacent to each other have each an inclination variation ranging from 0° to 10° with respect to one another.

**.** In accordance with an embodiment, the first rectilinear portion of said at least one plurality of first rectilinear portions 8, 9, 10, 11, 12 and the last rectilinear portion of said at least one plurality of first rectilinear portions 8, 9, 10, 11, 12 have each an inclination variation ranging from 25° to 35° with respect to one another.

**.** It should be noted that the extruded lens 1 lacks both a geometric axis as well an optical axis.

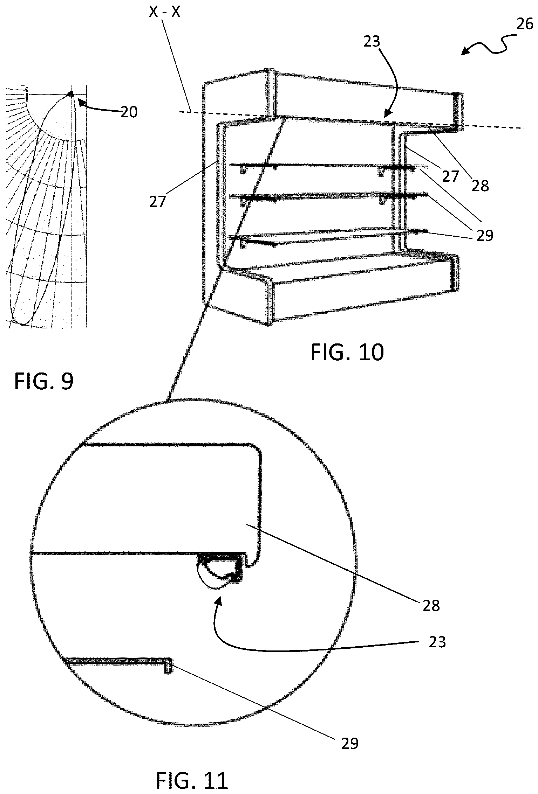

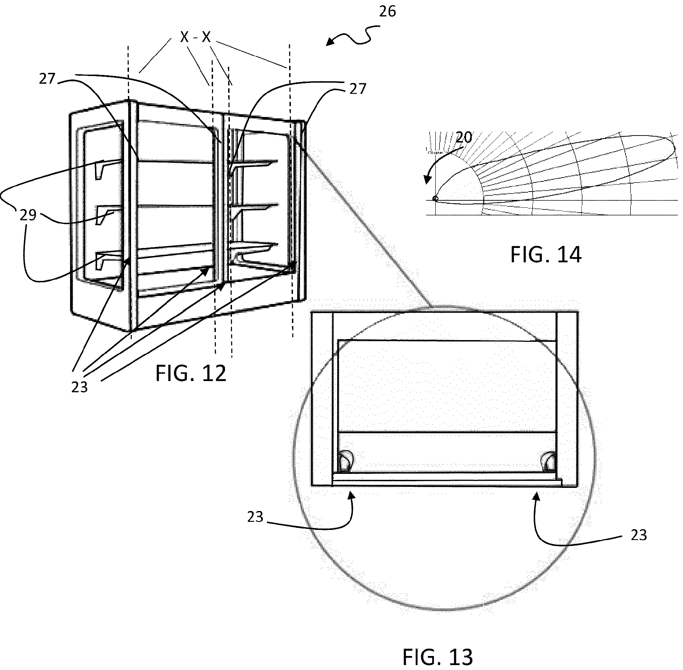

**.** By virtue of the fact that the radiation inlet edge 6 and the radiation outlet edge 7 have different shapes made with a sequence of different geometric elements, the light radiation which crosses the extruded lens 1 has an asymmetrical spatial distribution, as shown, for example, in Figure 13 and in Figure 11.

**.** The light radiation which crosses the extruded lens 1 is directed along a prevailing lighting direction and the light beam has an opening angle ranging from 10 degrees to 20 degrees, by virtue of the synergy between the refraction of the light radiation crossing the radiation inlet edge 6 and the refraction of the light radiation crossing the radiation outlet edge 7, in which the plurality of first rectilinear portions 8, 9, 10, 11, 12 of the radiation inlet edge 6 distribute the light radiation asymmetrically on the radiation outlet edge 7, in which the first arc of circumference 13 centrally forms the largest extension of the radiation outlet edge 7 and defines said prevalent illumination direction, while the second rectilinear portion 14 and the second arc of circumference 15 attenuate the angular opening of the exiting light beam.

**.** In accordance with an embodiment, said extruded lens 1 comprises a matted outer layer 16.

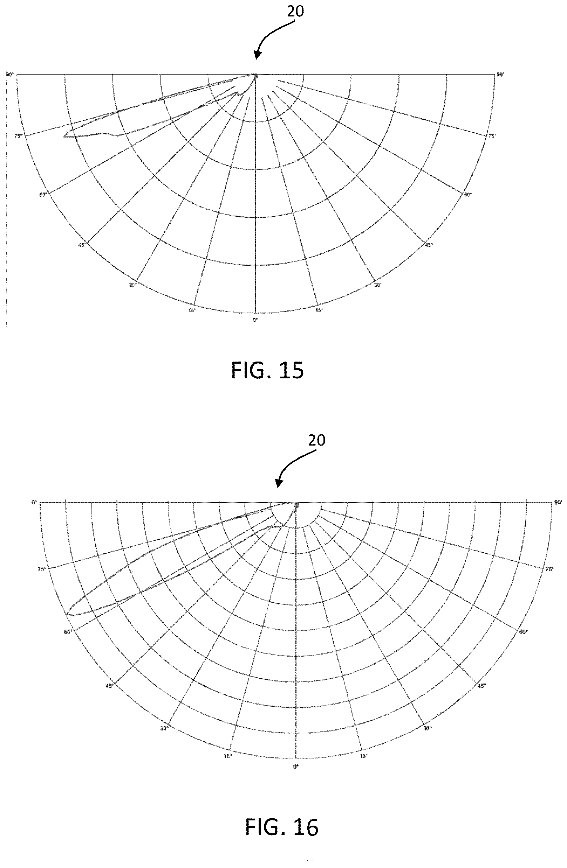

**.** With reference to Figures 15 and 16, it should be noted that said matted outer layer 16 allows a more even diffusion of the light radiation which crosses the extruded lens 1 and a slight opening of the light beam, with respect to an extruded lens 1 without said matted outer layer 16, as it may be observed by comparing Figure 14 and Figure 15.

**.** In accordance with the invention, said extruded lens 1 is obtained by co-extruding materials different from each other.

**.** Said extruded lens 1 comprises a co-extruded matted outer layer 16 for diffusing the light radiation.

**.** Said co-extruded matted outer layer 16 at least partially forms said outlet surface 4.

**.** In particular, said co-extruded matted layer 16 forms at least said second rectilinear portion 14 and said first arc of circumference 13 of said radiation outlet edge 7.

**.** In accordance with an embodiment, said co-extruded matted layer 16 forms said radiation outlet edge 7.

**.** In accordance with an embodiment, said co-extruded matted outer layer 16 forms at least said outlet surface 4.

**.** In accordance with an embodiment, said co-extruded matted outer layer 16 acts as the center of diffusion of the light radiation exiting the extruded lens 1 and softens the light beam directed towards the plane to be illuminated.

**.** In accordance with an embodiment, the plane to be illuminated is a vertical plane.

**.** In accordance with the invention, said co-extruded matted outer layer 16 seamlessly extends to form at least one inlet surface portion 17 of said inlet surface 3.

**.** In particular, said inlet surface portion 17 is the portion of said inlet surface 3 which is closest to said plurality of LEDs 2.

. In accordance with an embodiment, said inlet surface portion 17 includes the orthogonal projection of said second rectilinear portion 14 on said radiation inlet edge 7.

**.** In accordance with an embodiment, said co-extruded matted outer layer 16 also acts as the center of diffusion for a radiation portion entering the extruded lens 1. Thereby, the light radiation is softened at the inlet to the extruded lens 1 itself.

**.** By virtue of the synergy between the diffusion, given by the co-extruded matted outer layer 16, and the refraction of the radiation crossing said inlet surface 3 and said outlet surface 4, obtained according to the geometries described above, the light radiation crossing said extruded lens 1, on the one hand, is sufficiently directed on a vertical plane to illuminate so as to avoid unwanted dazzling, and, on the other, is sufficiently deep, diffused and uniform so as to limit the formation of areas more illuminated with respect to others on objects arranged in different positions on said plane to be illuminated.

**.** Preferably, said co-extruded matted outer layer 16 has a thickness ranging from a minimum of 20µm to a maximum of 1000µm.

**.** More preferably, said co-extruded matted outer layer 16 has a thickness ranging from a minimum of 100µm to a maximum of 200µm.

**.** In accordance with an embodiment, the extruded lens 1 is made of polycarbonate having a first molecular weight and said co-extruded matted outer layer 17 is made of polycarbonate having a second molecular weight.

**.** In accordance with an embodiment, the extruded lens 1 made of polycarbonate shields any ultraviolet radiation emitted by the plurality of LEDs 2.

**.** In accordance with an embodiment, the extruded lens 1 is made of PMMA (polymethylmethacrylate) or PETG (Polyethylene terephthalate glycol-modified).

**.** In accordance with an embodiment, said extruded lens 1 comprises a hinging portion 18 and a coupling portion 19.

**.** Said hinging portion 18 and said coupling portion 19 are connected to said inlet surface 3 and to said outlet surface 4. In other words, the hinging portion 18 and the coupling portion 19 form the portions of the extruded lens 1, which are lateral with respect to the inlet surface 3 and the outlet surface 4.

**.** According to an embodiment, said hinging portion 18 and said coupling portion 18, 19 are not active refraction parts of the light radiation emitted by said plurality of LEDs 2.

**.** According to an embodiment, with reference to the traverse lens section 5, said hinging portion 18 comprises an elongated flap 34 which connects said radiation inlet edge 6 and said radiation outlet edge 7.

**.** In particular, according to an embodiment, said elongated flap 34 is defined as an extension of said second portion of arc of circumference 15 connected to said radiation inlet edge 6 with a connecting segment substantially transverse to a rope underlying said plurality of first rectilinear portions 8, 9, 10, 11.

**.** According to an embodiment, with reference to the transverse lens section 5, said coupling portion 19 comprises a step flap 35 which connects said radiation inlet edge 6 and said radiation outlet edge 7.

**.** In particular, according to an embodiment, said step flap 35 is defined as an extension of said plurality of rectilinear portions 8, 9, 10, 11, 12 connected with a step to said second rectilinear portion 14.

**.** The present invention also relates to a lamp 20 comprising said extruded lens 1.

**.** Said lamp 20 comprises a support body 21 having snap-coupling means 22.

**.** Said lamp 20 comprises a plurality of LEDs 2 connected to said support body 21.

**.** In particular, the LEDs of said plurality of LEDs 2 are arranged in a row along an axis parallel to the longitudinal extension lens axis X-X.

**.** Said extruded lens 21 is coupled to said snap-coupling means 22.

. According to an embodiment, said support body 21 has a longitudinal development axis parallel to the longitudinal extension lens axis X-X.

**.** According to an embodiment, said support body 21 has a section transverse to said longitudinal development axis comprising a first segment 30 and a second segment 31 connected to each other.

**.** According to an embodiment, said first segment 30 has an extension less than said second segment 31.

**.** According to an embodiment, said transverse section of said support body 21 has an L-shape.

**.** According to an embodiment, said first segment 30 externally has a fastening groove 37.

**.** According to an embodiment, said snap-coupling means 22 comprise a hinging element 22a connected to a free end of said first segment 30, and a snap-coupling element 22b connected to a free end of said second segment 31.

**.** According to an embodiment, said hinging element 22a has a receiving seat 36 to receive said hinging portion 18 of said extruded lens 1.

**.** According to an embodiment, said snap-coupling element 22b comprises an undercut 38 for snap-coupling said coupling portion 19 of said extruded lens 1.

**.** According to an embodiment, said elongated flap 34 of said extruded lens 1 is positioned in said receiving seat 36 and said step flap 35 of said extruded lens 1 is snap-coupled onto said undercut 38.

**.** According to an embodiment, said elongated flap 34 of said extruded lens 1 has sufficient elasticity to elastically deform, to allow said step flap 35 to snap-couple onto said undercut 38.

**.** Therefore, said extruded lens 1 is coupled to said support body 21 in a position inclined with respect to said first and to said second segment, in which the inclination is defined by the relative position of said receiving seat 36 and said undercut 38.

**.** According to an embodiment, said snap-coupling means 22 are made in one piece with said support body 21.

**.** According to an embodiment, said support body 21 is an extruded support body.

**.** According to an embodiment, said support body 21 is made of aluminum.

**.** According to an embodiment, said plurality of LEDs 2 are connected to said support body 21 near said snap-coupling element 22b. In other words, with reference to the transverse section of the support body 21, the plurality of LEDs 2 is connected to said second segment 31 near said snap-coupling means 22b.

**.** According to an embodiment, with reference to the transverse section of the support body 21 and to the transverse section of the lens 5, said plurality of LEDs 2 is connected to the support body 21 on the segment 30, 31 closest to the second rectilinear portion 14 of the radiation outlet edge 7 of the extruded lens 1.

**.** According to an embodiment, with reference to the transverse section of the support body 21 and to the transverse lens section 5, said plurality of LEDs 2 is connected to the first segment 30 in a position underlying the orthogonal projection of said second rectilinear portion 14 on said radiation inlet edge 6.

**.** In accordance with an embodiment, each LED of said plurality of LEDs 2 is a Chip On Board (COB) LED.

**.** According to an embodiment, said lamp 10 comprises a control and power supply unit 33 of said plurality of LEDs 2.

**.** According to an embodiment, said plurality of LEDs 2 is a LED strip.

**.** In accordance with an embodiment, said plurality of LEDs 2 is a Chip On Board (COB) LED strip.

**.** The present invention also relates to a lamp holder assembly 23 comprising said lamp 20.

**.** Said lamp holder assembly 23 comprises at least one coupling body 24 connected to said lamp 20.

**.** According to an embodiment, said coupling body 24 has a main development direction parallel to said longitudinal extension lens axis X-X and is coupled to said support body 21 of said lamp 20.

**.** According to an embodiment, said coupling body 24 comprises a central plate 39 facing said second segment 31 connected to a first arm 40 in abutment against said free end of the second segment 31 and to a second arm 41 in abutment against said first segment 30.

**.** According to an embodiment, said second arm 41 comprises a coupling tab 25 fitted in said fastening groove 37 of said support body 21 of said lamp 20.

**.** According to an embodiment, said fastening tab is snap-fitted or inserted laterally into said fastening groove 37.

**.** According to an embodiment, said central plate 39 has at least one hole 42 for a fastening element 43 for fastening said coupling body 24 to a coupling surface 32.

**.** According to an embodiment, said fastening element 43 is a screw.

**.** According to an embodiment, said coupling body is a C-folded metal sheet.

**.** The present invention also relates to a merchandise display 26 comprising at least one previously described lamp holder assembly 23.

**.** Said merchandise display 26 comprises at least one upright 27, at least one displaying shelf 29 and/or at least one crosspiece 28.

**.** According to an embodiment, said lamp holder assembly 23 is coupled to said merchandise display 26 so that said plurality of LEDs 2 is in the closest possible position with respect to the vertical plane to be illuminated and in the farthest possible position with respect to an external user.

**.** According to an embodiment, said lamp holder assembly 23 is coupled to said merchandise display 26 so that the first segment 30 of said support body 21 of said lamp is positioned on the opposite side with respect to the plane to be illuminated.

**.** According to an embodiment, said lamp holder assembly 23 is coupled to said merchandise display 26 so that the second segment 31 is parallel to a coupling surface of said merchandise display 26.

**.** According to an embodiment, said lamp holder assembly 23 is coupled to said crosspiece 28 so that said lamp 20 is positioned with the longitudinal extension lens axis X-X thereof horizontally, to uniformly illuminate from above a plurality of displaying shelves 29 underlying said crosspiece 28, thus avoiding dazzling users approaching said merchandise display 26.

**.** According to an embodiment, said merchandise display 26 comprises a plurality of uprights 27 and a plurality of shelves 29 and said lamp holder assembly 23 is coupled to at least one upright of said plurality of uprights 27 so that said lamp holder assembly 23 is positioned with the longitudinal extension lens axis X-X in a vertical position, to laterally, uniformly illuminate the front part of said plurality of displaying shelves 29, in other words, the vertical plane defined by the front part of said plurality of displaying shelves 29, without dazzling users approaching said merchandise display 26.

**.** According to an embodiment, said merchandise display 26 comprises a plurality of uprights 27, a plurality of shelves 29 and a plurality of lamp holder assemblies 23. Each lamp holder assembly 23 is coupled to a corresponding front upright of said plurality of uprights 27 so that, for each pair of facing front uprights, two lamp holder assemblies 23 are placed in a vertical position and are symmetrically oriented to uniformly illuminate said plurality of displaying shelves 29 laterally, in other words, to illuminate as evenly as possible the vertical plane defined by the front part of said plurality of displaying shelves 29.

**.** Said merchandise display 26 is, for example, a horizontal and vertical refrigerated counter, either a plug-in version or with a remote or connected motor.

. A person skilled in the art, in order to satisfy contingent needs, may modify and adapt the embodiments of the devices described above, without departing from the scope of the following claims.

. Each of the features described as belonging to a possible embodiment may be achieved independently of the other embodiments.

### . LIST OF REFERENCES

- 1: extruded lens
- 2: plurality of LEDs
- 3: inlet surface
- 4: outlet surface
- 5: transverse section
- 6: radiation inlet edge
- 7: radiation outlet edge
- 8: first rectilinear portion
- 9: first rectilinear portion
- 10: first rectilinear portion
- 11: first rectilinear portion
- 12: first rectilinear portion
- 13: first arc of circumference
- 14: second rectilinear portion
- 15: second arc of circumference
- 16: co-extruded matted outer layer
- 17: inlet surface portion
- 18: hinging portion
- 19: coupling portion
- 20: lamp
- 21: support body
- 22: snap-coupling means
- 22a: hinging element
- 22b: snap-coupling element
- 23: lamp holder assembly
- 24: coupling body
- 25: coupling tab
- 26: merchandise display
- 27: upright
- 28: crosspiece
- 29: shelf
- 30: first segment
- 31: second segment
- 32: coupling surface
- 33: control and power supply unit
- 34: elongated flap
- 35: step flap
- 36: receiving seat
- 37: fastening groove
- 38: undercut
- 39: central plate
- 40: first arm
- 41: second arm
- 42: hole
- 43: fastening element

- X-X: longitudinal extension lens axis

## Claims

1. An extruded lens (1) for distributing the radiation emitted by a plurality of LEDs (2), wherein
said extruded lens (1) defines a longitudinal extension lens axis (X-X), and wherein said extruded lens (1) comprises:
an inlet surface (3) of the radiation which can face said plurality of LEDs (2);
an outlet surface (4) of the radiation from said extruded lens (1); a transverse lens section (5), transverse to said longitudinal extension lens axis (X-X); wherein said transverse lens section (5) is a section with an asymmetrical shape;
said transverse lens section (5) comprises a radiation inlet edge (6);
said radiation inlet edge (6) comprises at least one plurality of first rectilinear portions (8, 9, 10, 11, 12); and
said radiation inlet edge (6) is a concave edge;
said transverse lens section (5) comprises a radiation outlet edge (7);
said radiation outlet edge (7) comprises at least one first arc of circumference (13) and at least one second rectilinear portion (14) [par.52] and
said radiation outlet edge (7) comprises a second arc of circumference (15) [par.55] and
said second arc of circumference (15) is adjacent to said first arc of circumference (13)
**characterized in that**
said radiation outlet edge (7) is a convex edge, and **in that** said extruded lens (1) is obtained by co-extruding two different materials; and wherein
said extruded lens (1) comprises a co-extruded matted outer layer (16) for diffusing the light radiation at least partially forming said outlet surface (4),
wherein said co-extruded matted outer layer (16) seamlessly extends to form at least one inlet surface portion (17) of said inlet surface (3).

2. An extruded lens (1), according to any one of the preceding claims, wherein
two first rectilinear portions of said at least one plurality of first rectilinear portions (8, 9, 10, 11, 12) positioned adjacent to each other have extensions which are different from each other.

3. An extruded lens (1), according to the preceding claim, wherein: said inlet surface portion (17) is the portion which is closest to said plurality of LEDs (2).

4. An extruded lens (1), according to claim 1, wherein:
said co-extruded matted outer layer (16) has a thickness between a minimum of 20µm and a maximum of 1000µm.

5. An extruded lens (1), according to claim 1, wherein:
said extruded lens (1) is made of polycarbonate having a first molecular weight and wherein
said co-extruded matted outer layer (16) is made of polycarbonate having a second molecular weight.

6. An extruded lens (1), according to any one of the preceding claims, wherein
said extruded lens (1) comprises a hinging portion (18) and a coupling portion (19), said hinging portion (18) and said coupling portion (19) being connected to said inlet surface (3) and to said outlet surface (4).

7. A lamp (20) comprising an extruded lens (1) according to any one of the preceding claims.

8. A lamp (20), according to the preceding claim, wherein
said lamp (20) comprises:
a support body (21) having snap-coupling means (22a, 22b),
a plurality of LEDs (2) arranged in a row along an axis which is parallel to said longitudinal extension lens axis (X-X) and connected to said support body (21),
wherein said extruded lens (1) is coupled to said snap-coupling means (22a, 22b);
and/or wherein said plurality of LEDs (2) is a plurality of Chip On Board (COB) LEDs.

9. A lamp holder assembly (23) comprising a lamp (20) according to claim 7 or 8.

10. A lamp holder assembly (23), according to the preceding claim, wherein
said lamp holder assembly (23) comprises at least one coupling body (24) connected to said lamp (20).

11. A merchandise display (26) comprising at least one lamp holder assembly (23) according to claim 9 or 10.

12. A merchandise display (26), according to the preceding claim, wherein:
said merchandise display (26) comprises at least one upright (27), at least one crosspiece (28) and a plurality of merchandise displaying shelves (29), wherein
said lamp holder assembly (23) is coupled to at least one of said upright (27), said crosspiece (28) and a shelf of said plurality of shelves (29).

## Patentansprüche

1. Extrudierte Linse (1) zum Verteilen der Strahlung, welche durch eine Mehrzahl von LEDs (2) emittiert wird, wobei:
die extrudierte Linse (1) eine longitudinale Erstreckung-Linsenachse (X-X) definiert, und wobei die extrudierte Linse (1) umfasst:
eine Einlassfläche (3) der Strahlung, welche der Mehrzahl von LEDs (2) zugewandt sein kann;
eine Auslassfläche (4) der Strahlung aus der extrudierten Linse (1);
einen transversalen Linsenbereich (5), welcher zu der longitudinalen Erstreckung-Linsenachse (X-X) transversal ist; wobei der transversale Linsenbereich (5) ein Bereich mit einer asymmetrischen Form ist;
der transversale Linsenbereich (5) einen Strahlung-Einlassrand (6) umfasst;
der Strahlung-Einlassrand (6) wenigstens eine Mehrzahl erster geradliniger Abschnitte (8, 9, 10, 11, 12) umfasst; und
der Strahlung-Einlassrand (6) ein konkaver Rand ist;
der transversale Linsenbereich (5) einen Strahlung-Auslassrand (7) umfasst;
der Strahlung-Auslassrand (7) wenigstens einen ersten Umfangsbogen (13) und wenigstens einen zweiten geradlinigen Abschnitt (14) umfasst, wobei der erste Umfangsbogen (13) benachbart zu dem wenigstens einen zweiten geradlinigen Abschnitt (14) ist, und
der Strahlung-Auslassrand (7) einen zweiten Umfangsbogen (15) umfasst, und
der zweite Umfangsbogen (15) benachbart zu dem ersten Umfangsbogen (13) ist,
**dadurch gekennzeichnet, dass**
der Strahlung-Auslassrand (7) ein konvexer Rand ist und dadurch, dass
die extrudierte Linse (1) durch Coextrudieren zweier unterschiedlicher Materialien erhalten wird; und wobei
die extrudierte Linse (1) eine coextrudierte mattierte äußere Schicht (16) zum Zerstreuen der Lichtstrahlung umfasst, welche wenigstens teilweise die Auslassfläche (4) bildet,
wobei sich die coextrudierte mattierte äußere Schicht (16) übergangslos erstreckt, um wenigstens einen Einlass-Flächenabschnitt (17) der Einlassfläche (3) zu bilden.

2. Extrudierte Linse (1) nach einem der vorhergehenden Ansprüche, wobei zwei geradlinige Abschnitte der wenigstens einen Mehrzahl erster geradliniger Abschnitte (8, 9, 10, 11, 12), welche benachbart zueinander sind, Erweiterungen aufweisen, welche voneinander unterschiedlich sind.

3. Extrudierte Linse (1) nach dem vorhergehenden Anspruch, wobei der Einlass-Flächenabschnitt (17) der Abschnitt ist, welcher am nächsten zu der Mehrzahl von LEDs (2) ist.

4. Extrudierte Linse (1) nach Anspruch 1, wobei die coextrudierte mattierte äußere Schicht (16) eine Dicke zwischen einem Minimum von 20 µm und einem Maximum von 1000 µm aufweist.

5. Extrudierte Linse (1) nach einem der Ansprüche 1 oder 43, wobei:
die extrudierte Linse (1) aus Polycarbonat hergestellt ist, welches ein erstes molekulares Gewicht aufweist, und wobei
die coextrudierte mattierte äußere Schicht (16) aus Polycarbonat hergestellt ist, welches ein zweites molekulares Gewicht aufweist.

6. Extrudierte Linse (1) nach einem der vorhergehenden Ansprüche, wobei die extrudierte Linse (1) einen Gelenkabschnitt (18) und einen Kopplungsabschnitt (19) umfasst, wobei der Gelenkabschnitt (18) und der Kopplungsabschnitt (19) mit der Einlassfläche (3) und der Auslassfläche (4) verbunden sind.

7. Lampe (20), umfassend eine extrudierte Linse (1) nach einem der vorhergehenden Ansprüche.

8. Lampe (20) nach dem vorhergehenden Anspruch, wobei die Lampe (20) umfasst:
einen Stützkörper (21), welcher Schnappkopplungsmittel (22a, 22b) aufweist,
eine Mehrzahl von LEDs (2), welche an einer Achse, welche parallel zu der longitudinalen Erstreckung-Linsenachse (X-X) ist, entlang einer Reihe angeordnet sind und mit dem Stützkörper (21) verbunden sind,
wobei die extrudierte Linse (1) mit den Schnappkopplungsmitteln (22a, 22b) gekoppelt ist;
und/oder wobei die Mehrzahl von LEDs (2) eine Mehrzahl von Chip-on-Board-(COB)-LEDs ist.

9. Lampenhalteranordnung (23), umfassend eine Lampe (20) nach Anspruch 7 oder 8.

10. Lampenhalteranordnung (23) nach dem vorhergehenden Anspruch, wobei die Lampenhalteranordnung (23) wenigstens einen Kopplungskörper (24) umfasst, welcher mit der Lampe (20) verbunden ist.

11. Warenauslage (26), umfassend wenigstens eine Lampenhalteranordnung (23) nach Anspruch 9 oder 10.

12. Warenauslage (26) nach dem vorhergehenden Anspruch, wobei:
die Warenauslage (26) wenigstens einen Ständer (27), wenigstens ein Querstück (28) und eine Mehrzahl von Warenauslage-Regalen (29) umfasst, wobei
die Lampenhalteranordnung (23) mit wenigstens einem aus dem Ständer (27), dem Querstück (28) und einem Regal der Mehrzahl von Regalen (29) gekoppelt ist.

## Revendications

1. Lentille extrudée (1) pour distribuer le rayonnement émis par une pluralité de LEDs (2), dans laquelle
ladite lentille extrudée (1) définit un axe de lentille d'extension longitudinale (X-X), et dans laquelle ladite lentille extrudée (1) comprend :
une surface d'entrée (3) du rayonnement qui peut faire face à ladite pluralité de LEDs (2) ;
une surface de sortie (4) du rayonnement de ladite lentille extrudée (1) ;
une section de lentille transversale (5), transversale audit axe de lentille d'extension longitudinale (X-X) ; dans laquelle ladite section de lentille transversale (5) est une section de forme asymétrique ;
ladite section de lentille transversale (5) comprend un bord d'entrée de rayonnement (6) ;
ledit bord d'entrée de rayonnement (6) comprend au moins une pluralité de premières parties rectilignes (8, 9, 10, 11, 12) ; et
ledit bord d'entrée de rayonnement (6) est un bord concave ;
ladite section de lentille transversale (5) comprend un bord de sortie de rayonnement (7) ;
ledit bord de sortie de rayonnement (7) comprend au moins un premier arc de circonférence (13) et au moins une seconde partie rectiligne (14), dans laquelle ledit premier arc de circonférence (13) est adjacent à ladite au moins une seconde partie rectiligne (14), et
ledit bord de sortie de rayonnement (7) comprend un second arc de circonférence (15) et
ledit second arc de circonférence (15) est adjacent audit premier arc de circonférence (13),
**caractérisée en ce que**
ledit bord de sortie de rayonnement (7) est un bord convexe, et **en ce que** ladite lentille extrudée (1) est obtenue par coextrusion de deux matériaux différents ; et dans laquelle
ladite lentille extrudée (1) comprend une couche externe mate coextrudée (16) pour diffuser le rayonnement lumineux formant au moins partiellement ladite surface de sortie (4),
dans laquelle ladite couche externe mate coextrudée (16) s'étend de manière homogène pour former au moins une partie de surface d'entrée (17) de ladite surface d'entrée (3).

2. Lentille extrudée (1) selon la revendication précédente, dans laquelle
deux premières parties rectilignes de ladite au moins une pluralité de premières parties rectilignes (8, 9, 10, 11, 12) positionnées adjacentes l'une à l'autre ont des extensions qui sont différentes l'une de l'autre.

3. Lentille extrudée (1) selon la revendication précédente, dans laquelle :
ladite partie de surface d'entrée (17) est la partie qui est la plus proche de ladite pluralité de LEDs (2).

4. Lentille extrudée (1) selon la revendication 1, dans laquelle :
ladite couche externe mate coextrudée (16) a une épaisseur comprise entre un minimum de 20 µm et un maximum de 1 000 µm.

5. Lentille extrudée (1) selon l'une quelconque des revendications 1 à 4, dans laquelle :
ladite lentille extrudée (1) est constituée de polycarbonate ayant un premier poids moléculaire et dans laquelle
ladite couche externe mate coextrudée (16) est constituée de polycarbonate ayant un second poids moléculaire.

6. Lentille extrudée (1) selon l'une quelconque des revendications précédentes, dans laquelle
ladite lentille extrudée (1) comprend une partie d'articulation (18) et une partie de couplage (19), ladite partie d'articulation (18) et ladite partie de couplage (19) étant reliées à ladite surface d'entrée (3) et à ladite surface de sortie (4).

7. Lampe (20) comprenant une lentille extrudée (1) selon l'une quelconque des revendications précédentes.

8. Lampe (20) selon la revendication précédente, dans laquelle ladite lampe (20) comprend :
un corps de support (21) ayant des moyens de couplage par encliquetage (22a, 22b),
une pluralité de LEDs (2) disposées en rangée le long d'un axe qui est parallèle audit axe de lentille d'extension longitudinale (X-X) et reliées audit corps de support (21),
dans laquelle ladite lentille extrudée (1) est couplée auxdits moyens de couplage par encliquetage (22a, 22b) ;
et/ou dans laquelle ladite pluralité de LEDs (2) est une pluralité de LEDs à puce sur circuit imprimé (COB).

9. Ensemble support de lampe (23) comprenant une lampe (20) selon la revendication 7 ou 8.

10. Ensemble support de lampe (23) selon la revendication précédente, dans lequel
ledit ensemble support de lampe (23) comprend au moins un corps de couplage (24) relié à ladite lampe (20).

11. Présentoir de marchandises (26) comprenant au moins un ensemble support de lampe (23) selon la revendication 9 ou 10.

12. Présentoir de marchandises (26), selon la revendication précédente, dans lequel :
ledit présentoir de marchandises (26) comprend au moins un montant (27), au moins une traverse (28) et une pluralité d'étagères de présentation de marchandises (29), dans lequel
ledit ensemble support de lampe (23) est couplé à au moins un dudit montant (27), de ladite traverse (28) et d'une étagère de ladite pluralité d'étagères (29).
